# EUROPÄISCHE PATENTSCHRIFT

(11) **EP 2 635 365 B1**
(45) Veröffentlichungstag und Bekanntmachung des Hinweises auf die Patenterteilung: **06.04.2016**
(21) Anmeldenummer: 11781433.5
(22) Anmeldetag: 19.10.2011
(51) Int. Cl.: B01D 53/56, B01D 53/79, B05B 1/26, F23J 15/00

(54) **VERFAHREN UND VORRICHTUNG ZUR NICHT-KATALYTISCHEN ENTSTICKUNG VON ABGASEN VON VERBRENNUNGSANLAGEN**
METHOD AND DEVICE FOR THE NON-CATALYTIC DENITRIFICATION OF EXHAUST GASES FROM INCINERATION PLANTS
PROCÉDÉ ET DISPOSITIF DE DÉNITRATION NON CATALYTIQUE DE GAZ BRÛLÉS PROVENANT D'INSTALLATIONS DE COMBUSTION

(30) Priorität: 05.11.2010 DE 102010050334
(43) Veröffentlichungstag der Anmeldung: 11.09.2013
(73) Patentinhaber: Krüger, Jörg, 92421 Schwandorf (DE)
(72) Erfinder: Krüger, Jörg, 92421 Schwandorf (DE)
(74) Vertreter: Flaccus, Rolf-Dieter
(86) Internationale Anmeldenummer: PCT/EP2011/005271
(87) Internationale Veröffentlichungsnummer: WO 2012/059184

(56) Entgegenhaltungen:
- EP-A1- 0 364 712
- EP-A1- 2 578 936
- EP-A2- 0 337 073
- DE-A1- 4 434 942
- DE-A1- 19 713 136
- US-A- 5 315 941
- US-A1- 2006 008 393

## Beschreibung

Die Erfindung betrifft ein Verfahren und eine Vorrichtung zur nicht-katalytischen Entstickung der Abgase von Verbrennungsanlagen mittels Ammoniak- und/oder Harnstofflösungen.

Bisher werden in Kesselanlagen großtechnische Entstickungsanlagen eingesetzt, welche Ammoniak und Harnstoff mit ohnehin im Verbrennungsgas vorhandenem Sauerstoff zur Umwandlung der Stickoxidverbindungen zu Wasser und Stickstoff benutzen. Während Ammoniak sowohl bei dem selektiven katalytischen Verfahren (SCR) als auch bei dem selektiven nicht-katalytischen Verfahren (SNCR) genutzt werden kann, kommt Harnstoff dabei nur bei dem selektiven nicht-katalytischen Verfahren zum Einsatz.

Bei dem selektiven nicht-katalytischen Verfahren wird kein Katalysator verwendet. Ammoniak- oder Harnstofflösungen werden über Zweistoffdüsen dem Feuerraum zugeführt und sollen bei Verbrennungsgastemperaturen zwischen 850°C und 1000°C mit den Stickoxiden reagieren.

In EP A 0 326 943 wird eine solche Zweistoffdüse für die Eindüsung von Ammoniak beschrieben.
In dem Patent DE 197 28 344 wird beschrieben, wie Harnstoff, gelöst in Wasser, über eine im Verbrennungsgasraum des Kessels angeordnete Zweistoffdüse in den Kessel eingedüst wird. Als Treibmittel für die Vermischung des Harnstoffs mit dem Verbrennungsgas wird insbesondere Druckluft, Dampf oder rezirkuliertes Abgas genannt. Eine intensive Vermischung der Reagenzien mit den Abgasen wird angestrebt.

Höhere Verbrennungsgastemperaturen führen dazu, dass die Reagenzien verbrennen, tiefere Temperaturen können zu einem Teilumsatz und zu unzulässigen Ammoniakkonzentrationen im Abgas führen. Je nach der Last und der Verschmutzung des Kessels muss daher die Höhenlage der Eindüsung verändert werden, um die Eindüsung im optimalen Temperaturfenster vorzunehmen.

Im Patent DE 44 34 943 wird beschrieben, dass über mindestens in einer Ebene angeordnete Zweistoffdüsen Reduktionsmittel in das Prozess- bzw. Ab- bzw. Verbrennungsgas in einem Temperaturfenster von 800°C - 1200°C eingedüst werden, andere Quellen nennen 850°C bis 1050°C. In der Praxis werden daher in den Kesselwänden in zwei, drei oder vier Höhenebenen Düsen angeordnet. Über ausgefeilte Temperaturmessungen und Regelungen werden die jeweils geeigneten Zweistoffdüsen zur Eindüsung der Reagenzien benutzt. Die Zweistoffdüsen werden in ihrer Lage und Ausrichtung über eine komplexe Regelung optimal ausgerichtet.

Naturgemäß kann die Lage der Eindüsung hinsichtlich der optimalen Reaktionstemperatur nur ein Kompromiss sein, da die Lagen der Düsen in Ebenen in der Kesselwand nicht stufenlos verändert werden können und der Abstand dieser Ebenen aus konstruktiven Gründen nicht beliebig klein gewählt werden kann.

Im Patent DE 37 22 523 wird eine Vorrichtung beschrieben, mit der die Verdüsung von Ammoniak mit Druckluft über einen Lanzenstock im Feuerraum stufenlos vertikal verfahren werden kann.
Der Nachteil dieser thermisch und chemisch hoch belasteten Vorrichtung liegt darin, dass die Vorrichtung bei Betrieb der Kesselanlage nicht gewartet werden kann und somit der Kessel für Wartungsarbeiten an der Vorrichtung abgefahren werden muss.

In den meisten SNCR Verfahren wird, wie z. B in DE 44 34 943 beschrieben, Ammoniak- oder Harnstofflösung bzw. eine Mischung dieser beiden Lösungen mit Treibmittel wie z. B. Dampf oder Druckluft feinverteilt über Zweistoffdüsen in das zu behandelnde Verbrennungsgas eingedüst. Vor der Eindüsung bildet sich ein Freistahl aus, dessen horizontale Geschwindigkeit sehr schnell abnimmt. Die Eindringtiefe des Freistrahls mit dem verdampften Ammoniak und/oder Wasser in die vertikale Verbrennungsgasströmung ist zu gering. Trotz der feinen Verteilung der Flüssigkeit und der hohen Eintrittgeschwindigkeit des Flüssigkeitsnebels gelingt es daher nur unzureichend, die Reagenzien mit dem strömenden verbrennungsgas zu vermischen. Der Impuls des eintretenden Nebelstromes ist bei technisch vertretbaren Treibgasdrücken und -mengen zu gering, um eine intensive Vermischung mit dem gesamten zu behandelnden Verbrennungsgas sicherzustellen. Die angestrebten feinen Durchmesser der Tropfen führen dazu, das die Geschwindigkeit der Tropfen praktisch gleich der Gasgeschwindigkeit im Freistrahl ist. Die Geschwindigkeiten der entsprechenden zu durchmischenden Gasschichten der Kessel liegen in dem für das SNCR Verfahren geeigneten Bereichen zumeist zwischen 5 und 10 m/s, die vertikale Gasgeschwindigkeit des Verbrennungsgases zumeist zwischen 4 und 6 m/s. Da kleinere Wassertröpfchen schneller verdampfen als die größeren, ist daher die Eindringtiefe auch unabhängig vom Anfangsimpuls begrenzt.

In DE 37 22 523 wird auf Messergebnisse hingewiesen, die zeigen, dass beim Eindüsen von Ammoniak über Zweistoffdüsen von der seitlichen Kesselwand besonders bei Feuerungsanlagen mit größerem Querschnitt des Verbrennungsgaszuges eine gute Durchmischung von Verbrennungsgas und Ammoniak nicht erreichbar ist. In diesem Zusammenhang wird auf die DE-OS 35 02 788 hingewiesen.
Diese angestrebte gleichmäßige Verteilung von Ammoniak ist mit dem in DE 37 22 523 genannten absenkbaren Düsenstock grundsätzlich möglich, aufgrund der genannten aggressiven Bedingungen und der fehlenden Wartungsmöglichkeit konnte sich das Verfahren mit dieser Vorrichtung jedoch nicht durchsetzen.

Die EP 0364712 A1 offenbart eine Vorrichtung und ein Verfahren zur SNCR von Stickoxiden, bei dem das Reduktionsmittel mit einem Zerstäubungsmittel im zentralen Zuleitungsrohr einer Einstoffdüse, z.B. einer Fächerdüse, gemischt und anschließend in das Verbrennungsabgas eingedüst wird. Die Tropfengröße wird dabei durch die Menge an Zerstäubungsmittel bestimmt.

Nach dem Stand der Technik können die NOx Konzentrationen, ausgehend von ca. 400 mg/Nm³, mit den SNCR Verfahren unter 200 mg/Nm³ abgesenkt werden. Eine weitere Absenkung deutlich unter 100 mg/Nm³ wird vom Gesetzgeber angestrebt. Dies ist nach dem Stand der Technik bisher nicht möglich ohne einen erhöhten Ammoniakschlupf im Abgas der Anlage. Die Grenzwerte für diesen Schlupf sind bisher in Deutschland nicht einheitlich festgelegt. Die zulässigen Ammoniakgrenzwerte für die einzelnen Anlagen werden jeweils in der Genehmigung. festgelegt und liegen zwischen 10 und 50 mg/Nm³. Der Anstieg der Ammoniakkonzentration im Abgas resultiert aus dem höheren stöchiometrischen Überschuss, der bisher für eine höhere Abscheideleistung notwendig ist.
In DE 196 00 869 wird beispielsweise darauf hingewiesen, dass ein stöchiometrischer Überschuss von 2,0 bei einer Abscheideleistung von über 80 % notwendig ist.

Aufgabe der Erfindung ist, die oben beschriebenen Nachteile zu überwinden und ein Verfahren sowie eine Vorrichtung zur Verfügung zu stellen, welche es ermöglichen, die NOx Konzentrationen insbesondere unter 100 mg/Nm³ abzusenken, ohne die zulässigen Grenzwerte für das Reduktionsmittel, insbesondere den Ammoniakschlupfwert von 10 mg/Nm³/h, zu überschreiten.

Diese Aufgabe wird durch ein Verfahren und eine Vorrichtung nach den Ansprüchen gelöst.

Ursache für diese unzureichende NOx-Reduktion und den hohen Ammoniakschlupf ist vor allem die schlechte Verteilung der Reduktionsmittel im Verbrennungsgas in dem für die Reaktion geeigneten Temperaturfenster von 800°C bis 1000°C, die einen hohen stöchiometrischen Überschuss der Reduktionsmittel erfordert. Wird das Reduktionsmittel in zu kaltes Verbrennungsgas eingebracht, wird es auch bei guter Verteilung im Verbrennungsgas durch die mangelhafte Reaktion einen erhöhten Ammoniakschlupf verursachen.

Bei dem erfindungsgemäßen Verfahren wird ein Reduktionsmittel in geeigneter Menge pro Zeiteinheit gleichmäßig in einem vorher festgelegten Bereich des Verbrennungsgases mittels einer Spaltdüse verteilt, so dass sich Tropfen des Reduktionsmittels aus einem aus der Spaltdüse austretenden Film des Reduktionsmittels im Verbrennungsgas bilden und die in den zu behandelnden Verbrennungsgasvolumenstrom pro Zeiteinheit eingebrachten Reduktionsmittelmengen vor den Wänden des Verbrennungsraumes verdampfen.

Dabei werden die Flüssigkeitstropfen nicht durch die Verwendung eines insbesondere gasförmigen Treibmittels erzeugt. Die Zerstäubung des Reduktionsmittels durch die Düse erfolgt also ohne den Einsatz eines Treibmittels, insbesondere ohne den Einsatz von Treibgasen.

Dies kann mittels Messungen, insbesondere optischen Messungen und Temperaturmessungen, verfolgt werden. Zum Beispiel lässt sich mittels Temperaturmessungen an den Wänden des Verbrennungsraumes feststellen, ob sich die Wände durch die Verdampfung von Tropfen an dem Wandmaterial abkühlen. Vorteil dieses Verfahrens ist, dass eine energieintensive Vermischung der Reagenzien mit dem Verbrennungsgas bzw. der Verbrennungsgasströmung durch Einleiten von Mischimpulsen nicht angestrebt wird. Die Verbrennungsgasströmung wird durch eine solche Verteilung des Reduktionsmittels kaum beeinflusst.

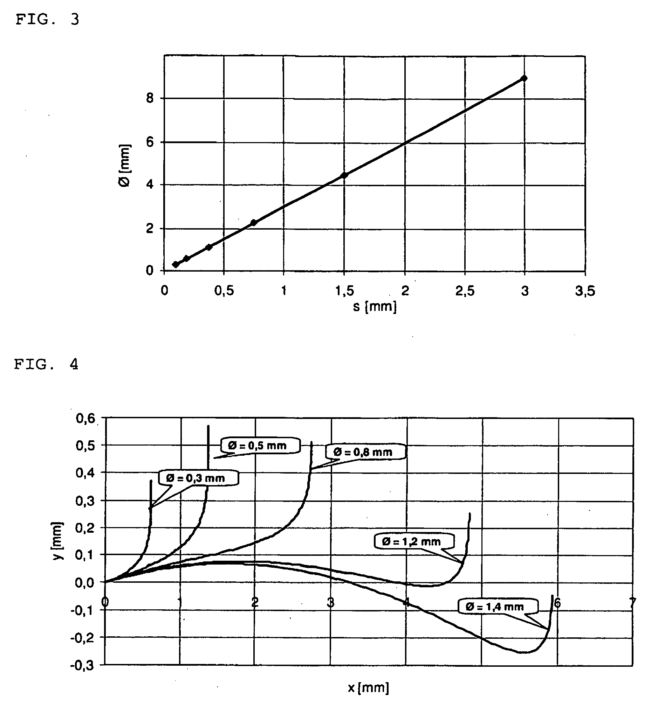

Es hat sich überraschend bei Grundlagenuntersuchungen zum Verhalten von Wassertropfen gezeigt, dass mit einer Spaltdüse über die geometrischen Abmessungen der Düse Tropfen mit einem definierten Durchmesser und einer definierten Austrittsgeschwindigkeit erzeugt werden können (siehe dazu auch FIG. 3). Durch gezielte Einstellung des Durchmessers der Tropfen, im Folgenden auch als 'Tropfengröße' bezeichnet, und die Tropfengeschwindigkeit lassen sich auch schneller strömende starke Verbrennungsgasschichten problemlos durchdringen.
Folglich ist bevorzugt, dass durch gezielte Veränderung der Düsenöffnung die Menge des Reduktionsmittels, das pro Zeiteinheit in das Verbrennungsgas eingedüst wird, vorzugsweise die Tropfengröße von Reduktionsmitteltropfen und die Austrittsgeschwindigkeit der Tropfen, dermaßen geregelt wird, dass beliebige Bereiche von Verbrennungsgasen durchdrungen werden können, ohne dass Tropfen auf der Kesselwand auftreffen, weil diese davor verdampfen.
Dabei ist zu beachten, dass aus den ausgetretenen flüssigen Reduktionsmittelmengen schon nach kurzer Zeit nach dem Austreten aus einer Düse aufgrund der Kohäsionskräfte in der Flüssigkeit in der Regel Tropfen des Reduktionsmittels entstehen (je nach Größe bis zu 20 cm). Der erfindungsgemäße Fall bezieht sich auf Tropfen des Reduktionsmittels, die sich erst im Verbrennungsgas aus einem aus der Düse austretenden Film des Reduktionsmittels bilden. Die Formung von Tropfen aus einem Flüssigkeitsfilm ist insbesondere bei größeren eingedüsten Reduktionsmittelmengen pro Zeiteinheit die Regel. Im Folgenden wird daher auch von 'Tropfen' gesprochen, wobei damit die Reduktionsmittelmengen, die pro Zeiteinheit in das Verbrennungsgas eingebracht werden und ausgehend von einem Film zu Tropfen zerfallen, gemeint sind.

Eine bevorzugte Ausführungsform einer Spaltdüse ist eine auf eine Zuleitung des Reduktionsmittels aufgesetzte spaltförmige Düse und/oder ein Objekt vor dem Austritt der Zuleitung, welches dem Reduktionsmittelstrom lediglich einen Austritt zur Seite ermöglicht.

Die Position der Düse oder der Düsen in den Strahlungszügen oder in den Verbrennungsgasen ist in erster Linie beliebig, sofern es gewünscht ist, lediglich die Tropfengröße anzupassen. Jedoch können durch besondere Anordnungen zusätzliche Vorteile erreicht werden, insbesondere ist die Temperatur des Verbrennungsgases abhängig von der Höhenposition.
Insbesondere von Vorteil ist es, wenn die Höhenkote der Düse relativ zu der Temperatur eingestellt wird, so dass die Eindüsung im vorher wählbaren Temperaturbereich erfolgt. Auf diese Weise hat man außer der Regelung über die Menge des Reduktionsmittelflusses auch die Möglichkeit der Regelung über die Höhenkote, um eine geeignete Eindüsung des Reduktionsmittels zu erreichen.

In einer bevorzugten Ausführungsform wird die Düse zentral im Verbrennungsgas im zu behandelnden
Verbrennungsgasvolumenstrom angeordnet, um einen möglichst großen Abstand zu allen Kesselwänden sicherzustellen. Hierdurch wird mit möglichst wenig Aufwand ein hoher Nutzen hinsichtlich der Verteilung bei gleichzeitig sehr einfacher Düsenform erbracht.
In einer weiteren bevorzugten Anordnung werden mehrere Düsen regelmäßig beabstandet im Verbrennungsraum angeordnet. Dies ist insbesondere von Vorteil bei großen Verbrennungsräumen.

In einer weiteren bevorzugten Ausführungsform befinden sich die Düsen an der Seite der Strahlungszüge. Dies ist insbesondere von Vorteil, wenn der Zugang über die Decke der Strahlungszüge aus konstruktiven Gründen verhindert wird.

Es hat sich weiterhin überraschend gezeigt, dass durch die Veränderung der Düsenöffnung über den Umfang der Düse die Tropfengröße, der insbesondere in verschiedenen Richtungen aus der Düse austretenden Tropfen, und damit die Wurfweite der Tropfen im heißen Verbrennungsgas, insbesondere in Abhängigkeit von der Richtung, eingestellt werden kann (siehe dazu auch FIG. 4). Durch diese Maßnahme kann auch eine nicht quadratische Verbrennungsgasdurchströmte Fläche optimal mit Tropfen durchströmt werden.

Bei einem bevorzugten Verfahren wird das Reduktionsmittel aus mindestens einer Düse mit einstellbarer Düsenöffnung und/oder

Düsenhöhenkote in einen Bereich des Verbrennungsgases eingedüst. Vorzugsweise wird der Lösungsmittelfluss gemessen und ist durch eine Druckeinheit, vorzugsweise eine Pumpe, steuerbar.

Die Temperatur des Bereichs der Verbrennungsgase, in den das Reduktionsmittel eingedüst wird, wird, vorzugsweise fortlaufend, gemessen. Die Höhenkote und/oder die Öffnung der Düse wird dabei automatisch an die für die Reaktion optimale Verbrennungsgastemperatur angepasst.
Die optimale Temperatur wird insbesondere dadurch ermittelt, dass die Höhenkote und/oder Düsenöffnung sinusartig über die Zeit verändert wird und bei sonst konstanten Bedingungen die höchste Umsatzrate von NOx bestimmt wird.
Danach wird die Höhenkote und/oder Öffnung der Düse automatisch so eingestellt, dass die mit der Düse gemessene Verbrennungsgastemperatur konstant ist.
In einer weiteren Ausführungsform wird zusätzlich die NOx-Konzentration des Verbrennungsgases nach der Behandlung mit dem Reduktionsmittel gemessen und die Reduktionsmittelmenge, die pro Zeiteinheit in das Verbrennungsgas eingedüst wird, so eingestellt, dass sich die NOx-Konzentration stets in einem vorher festgelegten Wertebereich bewegt.

In einer bevorzugten Ausführungsform ist der Zufluss von Lösungsmittel, Ammoniak und/oder Harnstoff zur Düse einzeln steuerbar. Somit kann die Zusammensetzung des
Reduktionsmittels während der Ausführung des Verfahrens verändert werden.
Insbesondere wird der stöchiometrische Anteil von Ammoniak/Harnstoff über eine NOx- und/oder NH₃-Messung festgelegt. Dies geschieht bevorzugt dadurch, dass die NOx- und/oder NH₃-Konzentration des Verbrennungsgases nach der Behandlung mit dem Reduktionsmittel gemessen wird und die Anteile an Ammoniak/Harnstoff so eingestellt werden, dass sich die NOx- und/oder NH₃-Konzentration stets in einem vorher festgelegten Wertebereich bewegt.
In einer anderen bevorzugten Ausführungsform wird der Anteil an Ammoniak/Harnstoff durch eine vorher festgelegte Reaktion in Abhängigkeit von der Temperatur und der gemessenen NOx-Konzentration geregelt.

Eine solche Regelung wird bevorzugt dadurch erreicht, dass die NOx-Konzentration im Verbrennungsgas und vorzugsweise auch der Ammoniakschlupf bestimmt wird, nachdem das Verbrennungsgas den Bereich der Eindüsung durchströmt hat. Der Anteil an Ammoniak und/oder Harnstoff kann auf diese Weise geregelt werden.

In einer bevorzugten Ausführungsform wird die Temperatur der Düse oder der Zuleitung zu der Düse überwacht und bei Überschreiten von vorher festgelegten Richtwerten wird der Zufluss des Lösungsmittels oder des Lösungsmittelanteils im Reduktionsmittel erhöht, um eine Kühlung der Düse und deren Zuleitung zu erreichen.

Bevorzugte Reduktionsmittel enthalten Stoffe aus der Gruppe Ammoniak und Harnstoff, insbesondere in Form einer Lösung in einem Lösungsmittel, wobei bevorzugt beide Stoffe der Gruppe in Mischung in dem Reduktionsmittel enthalten sind.
Ein bevorzugtes Lösungsmittel hat eine höhere
Verdampfungstemperatur als Ammoniak, aber eine niedrigere als Harnstoff. Ein besonders bevorzugtes Lösungsmittel ist Wasser. Eine Mischung aus Ammoniak und Harnstoff in einem solchen Lösungsmittel, insbesondere in Wasser, hat den Vorteil, dass ab dem Zeitpunkt, zu dem das Reduktionsmittel in Tropfenform in das Verbrennungsgas eingedüst wurde, zunächst das Ammoniak auf der Flugbahn des Tropfens verdampft. Nachdem das Lösungsmittel des Tropfens vollständig verdampft ist, zersetzt sich der zugeführte Harnstoff zu Kohlendioxid und Ammoniak.
Aus Vereinfachungsgründen wird im entsprechenden Zusammenhang in der vorliegenden Anmeldung unter der Bezeichnung "Reduktionsmittel" sowohl das eigentliche Reduktionsmittel im chemischen Sinn als auch das jeweilige Lösungsmittel verstanden.

Bevorzugt haben die Tropfen einen Durchmesser zwischen 0,01 und 10 mm, insbesondere zwischen 0,3 und 2 mm.

Die Austrittsgeschwindigkeiten der Tropfen liegen bevorzugt zwischen 1 und 100 m/s, insbesondere zwischen 8 und 25 m/s.

Der Abflugwinkel der Tropfen liegt bevorzugt zwischen -10° und 60° gegenüber der waagerechten. Die Düse ist in diesem Falle dementsprechend geformt.

Eine erfindungsgemäße Vorrichtung weist eine Düsenanordnung auf, aus der das flüssige Reduktionsmittel in einen Bereich der Verbrennungsgase eingedüst wird, mindestens ein Messgerät, welches die Temperatur des Bereichs der Verbrennungsgase bestimmt, in den die Tropfen eindringen werden, und/oder ein Messgerät, das die NOx- und/oder NH₃-Konzentration der Verbrennungsgase nach der Eindüsung des Reduktionsmittels bestimmt, sowie einen Mechanismus, mit dem die Höhekote und/oder die Öffnung mindestens einer Düse verändert werden kann. Im Folgenden wird die Höhenkote und jede andere Öffnung der Düse unter dem Begriff 'Düsenöffnung' zusammengefasst.

Dabei umfasst das Merkmal, dass das Reduktionsmittel in einen Bereich der Verbrennungsgase eingedüst wird, den Fall, dass das Reduktionsmittel zunächst einen Film bildet, der in kurzem Abstand zur Düse in Tropfen zerfällt. Dieses Fall, also im Allgemeinen die Einbringung eines Reduktionsmittelstroms, wird in der Beschreibung auch unter 'tropfenförmiger Eindüsung' oder 'Verteilung in Form von Flüssigkeitstropfen' verstanden.

In einer bevorzugten Ausführungsform wird eine Spaltdüse mit geeigneten Abmessungen durch die Kesseldecke in den optimalen Temperaturbereich geführt, wobei dieser Temperaturbereich messtechnisch erfasst wird.

wird eine solche Spaltdüse über eine Vorrichtung durch die Kesseldecke eingeführt, kann über eine entsprechende Höhenverstellvorrichtung, insbesondere eine stufenlose Höhenverstellvorrichtung, die Reduktionsmittelverteilung im für die umsetzungsreaktion optimalen Temperaturfeld vorgenommen werden.
Diese Vorrichtung bietet den zusätzlichen Vorteil, dass die Spaltdüse jederzeit für die Wartung aus dem Feuerraum entnommen und gewartet werden kann. Hierfür wird eine Ersatzdüse in annähernd gleicher Position eingebracht und in Betrieb genommen. Die Verbrennungsgastemperaturmessung im Nahbereich der Spaltdüse gestattet eine schnelle und sichere Einstellung der optimalen Einbringtiefe.

Die Düsenöffnung bzw. die Spaltgröße liegt bevorzugt zwischen 0,01 mm und 10 mm, insbesondere zwischen 0,3 mm und 1,2 mm, und kann insbesondere entsprechend der Verteilungsaufgabe in diesem Bereich variiert werden.

Beispiele für das erfindungsgemäße Verfahren und die erfindungsgemäße Vorrichtung sind in den Zeichnungen dargestellt.
FIG. 1: Darstellung eines typischen Abfallverbrennungskessels mit einer eingeführten Spaltsondenlanze und der Kontur der Tropfenbahn
FIG. 2A und 2B: Symbolische Darstellung der Spaltdüsenlanze
FIG. 3: Grafische Darstellung der Funktion der Tropfengröße von der Spalthöhe
FIG. 4: Darstellung der Flugbahn der Tropfen im Verbrennungsgas des Kessels
FIG. 5: Fließ- und Funktionsbild
FIG. 6: Diagramm mit Messergebnissen

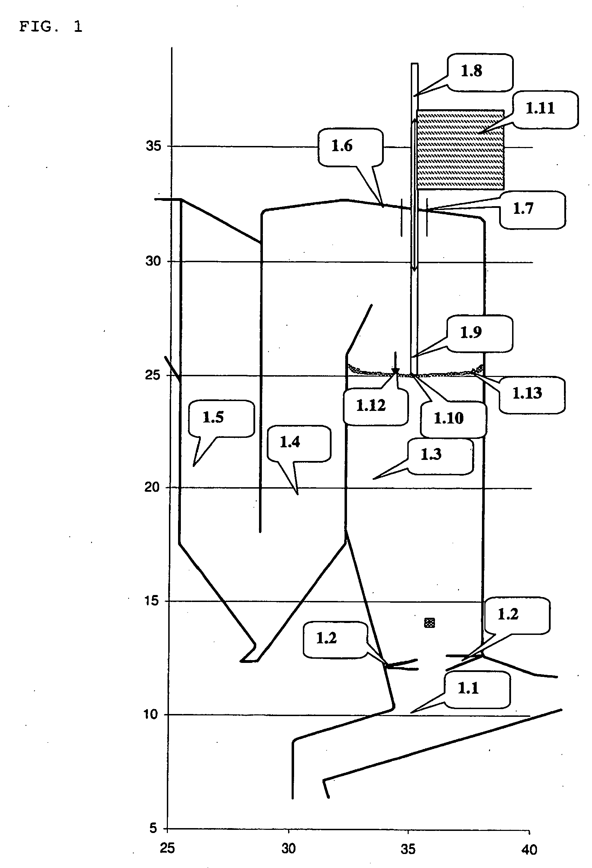

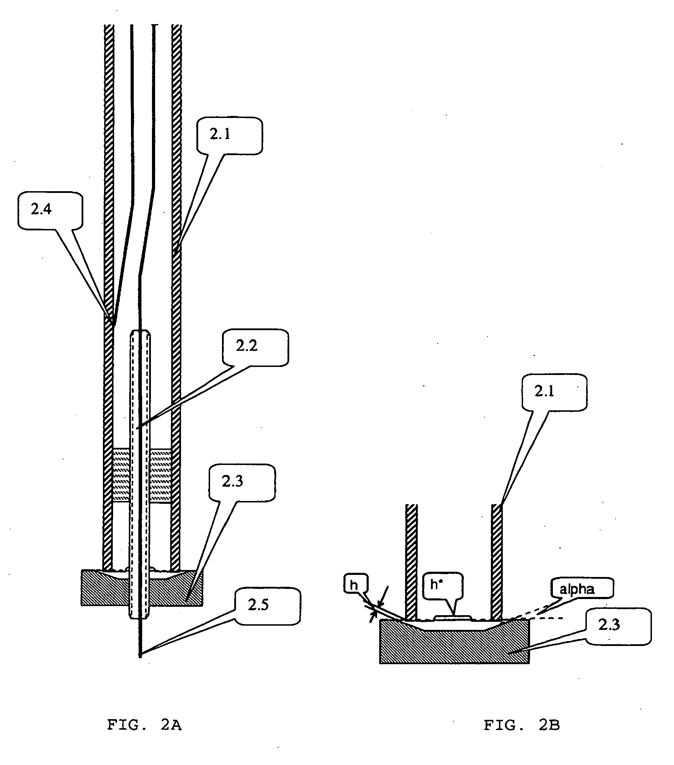

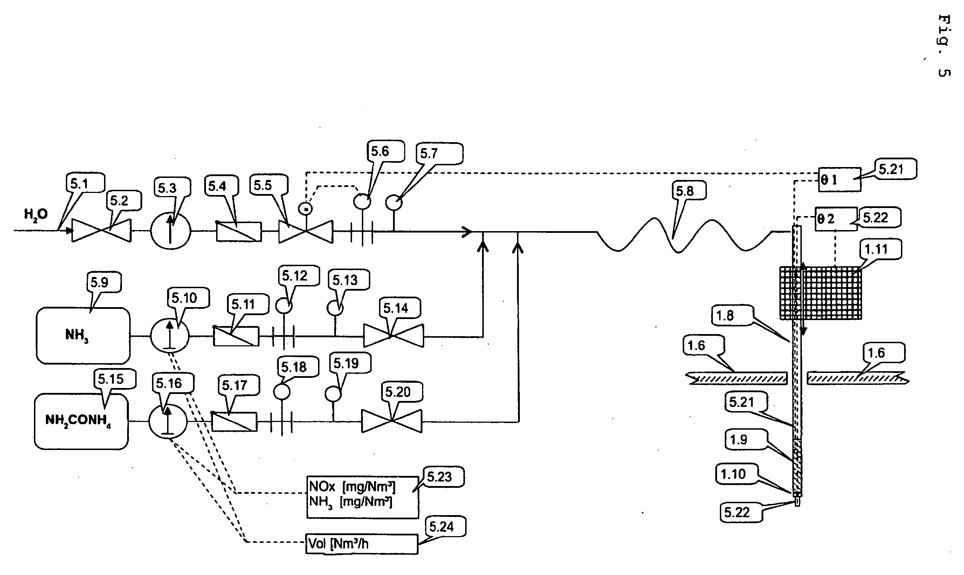

FIG. 1 zeigt einen Kessel einer Abfallverbrennungsanlage mit einem Feuerraum 1.1, der Sekundärlufteindüsung 1.2 und den ersten 1.3, den zweiten 1.4 und dritten 1.5 Strahlungszug. In der Decke 1.6 des ersten Strahlungszuges ist eine Lanzendurchführöffnung 1.7 eingebaut, durch die der Düsenstock 1.9 mit einer veränderbaren Spaltdüse 1.10 über einen hitzebeständigen Schlauch 1.8 oder ein hitzebeständiges Rohr 1.8 mittels einer Vorrichtung zur Einstellung der Höhenposition der Düse (Höhenverstellvorrichtung) 1.11 in die optimale Höhenposition 1.12 gebracht werden kann. Geeignete Höhenverstellvorrichtungen wären z.B. Seile, Zahnstangen oder ein Teleskopvorschub.
Zusätzlich ist die Kontur 1.13 der Bahn der Tropfen des Reduktionsmittels, die aus der Spaltdüse 1.10 austreten, eingezeichnet. Weitere Details zur Versorgung des Lanze und der Düse mit Reduktionsmittel sowie zum Aufbau des Düsenstockes sind in den FIG. 2 und 5 dargestellt.

FIG. 2A und 2B zeigen den Aufbau des Spaltdüsenstocks. Ein besonderes Element ist das Rohr 2.1, in dem zentrisch eine Gewindestange 2.2 fixiert ist. Auf der Gewindestange 2.2 ist eine Düsenplatte 2.3 montiert. Die Kontur der Düsenplatte 2.3 lässt die Flüssigkeit unter einem Winkel (alpha) austreten. Der Spalt zwischen der Düsenplatte und dem Rohr hat einen engsten Abstand h in der Größenordnung mm. Der Spalt kann über das Gewinde stufenlos eingestellt werden. Die dargestellte Kontur des Rohres führt dazu, dass der engste Spalt um die Höhe h* ansteigt. Über die Kontur des Rohres wird die Kontur des Spaltes gebildet, die über den Unfang variiert. Im Düsenstock sind zwei Thermoelemente 2.4, 2.5 eingebaut, die es gestatten, die Temperatur des Düsenstockes selbst und die Verbrennungsgastemperatur unter dem Thermoelement zu messen.

In einer ausführlichen Untersuchung wurde der Zusammenhang der Tropfendurchmesser von der Spalthöhe der Spaltdüse ermittelt. Das Diagramm in der FIG. 3 zeigt die Funktion der Tropfengröße Ø von der Spalthöhe s.

In FIG. 4 werden die Flugbahnen für Tropfen unterschiedlicher Größe in Abhängigkeit vom horizontalen Abstand von der Düse (x) und der Höhe über der Düse (y) dargestellt. In dieser Untersuchung treten alle Tropfen mit einer Geschwindigkeit von 16,7 m/s und einem Austrittswinkel von 5° gegenüber der Horizontalen aus. Das durchströmte Verbrennungsgas hat eine vertikale Geschwindigkeit von 4 m/s und eine Temperatur von 1000°C. Man erkennt sehr gut, dass die axialen Flugweiten mit dem Tropfendurchmesser überproportional zunehmen. Tropfen mit einem Durchmesser von 0,3 mm sind bereits nach 0,62 m, Tropfen mit einem Durchmesser von 0,5 mm nach 1,37 m verdampft. Diese Darstellung zeigt, dass die Reduktionsmittel, die mit Zweistoffdüsen fein verteilt (<< 0,1 mm) eingedüst werden, sofort nach dem Eindüsen verdampfen. In der Praxis wird man in Abhängigkeit von den Kesselababessungen Tropfengrößen zwischen 0,8 und 1,2 mm benötigen.

In FIG. 5 wird der grundsätzliche Aufbau der erfindungsgemäßen Vorrichtung dargestellt. Anstelle des dort beschriebenen Wassers kann jedes Mittel verwendet werden, welches sich als erfindungsgemäßes Lösungsmittel in dem Reduktionsmittel eignet.
Der Düsenstock 1.9 gemäß Figur 1 wird mit Wasser 5.1 gekühlt, das über das Wassereintrittsventil 5.2 von der Wasserdruckerhöhungspumpe 5.3 über das Wasserrückschlagventil 5,4, das Wasserregelventil 5.5, die Wassermengenmessung 5.6, den Verbindungsschlauch 5.7, das hitzebeständige Rohr bzw. den hitzebeständigen Schlauch 1.8 und den Düsenstock 1.9 zur spaltdüse 1.10 strömt.
Die Temperatur des Düsenstocks 1.9 wird über die Düsenstocktemperaturmessung 5.21 erfasst. Bei drohender Überschreitung der Siedetemperatur der Flüssigkeit im Düsenstock 1.9 wird die Wassermenge erhöht. Im Normalbetrieb wird die Wassermenge über das Regelventil 5.4 so eingestellt, dass die eingestellten Tropfen die Kesselwand gerade nicht erreichen.

Ammoniak wird über die Ammoniakdosierpumpe 5.10 aus dem Ammoniaktank 5.9 über das Ammoniakrückschlagventil 5.11, die Ammoniakmengenmessung 5.12 und das Ammoniakabsperrventil 5.14 dem Wasser vor dem Verbindungsschlauch 5.8 zugeführt. Bei Bedarf kann die sichere Funktion der Ammoniakdosierpumpe 5.10 mit dem Ammoniakmanometer 5.13 überprüft werden.

Die Harnstofflösung wird über die Harnstoffdosierpumpe 5.16 aus dem Harnstofflösungstank 5.15 über das Harnstoffrückschlagventil 5.17, die Harnstoffmengemessung 5.18 und das Harnstoffabsperrventil 5.20 dem Wasser vor dem Verbindungsschlauch 5.8 zugeführt. Bei Bedarf kann die sichere Funktion der Harnstoffdosierpumpe 5.16 mit dem Harnstoffmanometer 5.19 überprüft werden.

Die Verbrennungsgastemperaturmessung 5.22 regelt automatisch den Höhenstand (Figur 1; 1.12) der Spaltdüse im optimalen Verbrennungsgastemperaturfenster.

Die notwendigen Ammoniak- und Harnstoffmengen werden über die entsprechenden Dosierpumpen 5.10 und 5.16 anteilig mit 20 % stöchiometrischem Überschuss dosiert. Der stöchiometrische Reduziermittelbedarf wird über die NOx- und/oder Ammoniakmessung 5.23 nach Kessel und den Verbrennungsgasvolumenstrom 5.24 ermittelt.

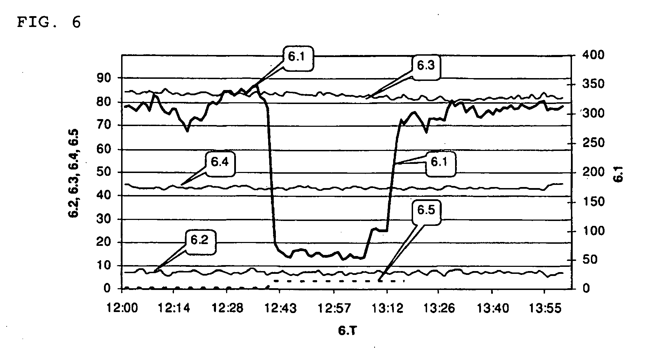

In Figur 6 wird die Wirkung des erfindungs gemäßen Verfahrens auf die NOx Konzentration nach dem Kessel einer Müllverbrennungsanlage über einen Versuchszeitraum von 12:41 bis 13:12 dargestellt. Hierfür wurde die beschriebene Vorrichtung in dem Deckenbereich des 1. Zuges eingebracht und mit Ammoniak und Wasser betrieben. Durch die Dosierung von Ammoniak ist die NOx-Konzentration 6.1 nach dem Kessel von ca. 300 mg/Nm³ auf ca. 60 mg/Nm³ stark gefallen. Gleichzeitig wurde die Konzentration des Ammoniaks 6.5 in dem Verbrennungsgas untersucht.
Vor der Ammoniakdosierung lag die Konzentration von NH₃ 6.5 im Verbrennungsgas nach dem Kessel bei 0,22 mg/Nm³ NH₃. Während der Dosierung von Ammoniak stieg die Konzentration auf 1,4 mg/Nm³. Diese nasstechnisch ermittelten Mittelwerte wurden zusätzlich in die grafische Darstellung eingefügt. Die übrigen Daten, wie Sauerstoffkonzentration 6.2, Verbrennungsgasmenge 6.3 und Frischdampfleistung 6.4 wurden durch die Ammoniakeindüsung nicht erkennbar verändert.

### Bezugszeichenliste

1.1 Feuerraum
1.2 Sekundärlufteindüsung
1.3 1. Strahlungszug
1.4 2. Strahlungszug
1.5 3. Strahlungszug
1.6 Decke erster Strahlungszug
1.7 Lanzendurchführöffnung
1.8 Tauchrohr oder Schlauch
1.9 Düsenstock
1.10 Spaltdüse
1.11 Höhenverstellvorrichtung
1.12 optimale Höhenposition
1.13 Kontur der Tropfenbahn

2.1 Rohr des Düsenstocks
2.2 Zentrierte Gewindestange
2.3 Düsenplatte
2.4 Temperaturmessung Rohrwand
2.5 Temperaturmessung Verbrennungsgas

5.1 Wasser
5.2 Wassereintrittsventil
5.3 wasserdruckerhöhungspumpe
5.4 Wasserrückschlagventil
5-5 Wasserregelventil
5.6 Wassermengenmessung
5.7 Wasserdruckmessmanometer
5.8 Verbindungsschlauch
5.9 Ammoniaktank
5.10 Ammoniakdosierpumpe
5.11 Ammoniakrückschlagventil
5.12 Ammoniakmengenmessung
5.13 Ammoniakmanometer
5.14 Ammoniakabsperrventil
5.15 Harnstofflösungstank
5.16 Harnstoffdosierpumpe
5.17 Harnstoffrückschlagventil
5.18 Harnstoffmengenmessung
5.19 Harnstoffmanometer
5.20 Harnstoffabsperrventil
5.21 Düsenstocktemperaturmessung
5.22 Verbrennungsgastemperaturmessung
5.23 NOx- und/oder Ammoniakmessung nach Kessel
5.24 Verbrennungsgasvolumenstrom

6.1 0 - 1000 mg/Nm³ Nox
6.2 0 - 100% O₂
6.3 0 - 100.000 Nm³/h Verbrennungsgasmenge
6.4 0 - 100 t/h Frischdampf
6.5 0 - 10 mg/Nm³ NH₃
6.T Zeit am 19.11.2010

## Patentansprüche

1. Verfahren zur Entstickung der Abgase von Verbrennungsanlagen unter Verwendung eines flüssigen Reduktionsmittels, **dadurch gekennzeichnet, dass** das Reduktionsmittel in geeigneter Menge pro Zeiteinheit gleichmäßig in einem vorher festgelegten Bereich des Verbrennungsgases mittels einer Spaltdüse verteilt wird, so dass sich Tropfen des Reduktionsmittels aus einem aus der Spaltdüse austretenden Film des Reduktionsmittels im Verbrennungsgas bilden und die in den zu behandelnden Verbrennungsgasvolumenstrom pro Zeiteinheit eingebrachten Reduktionsmittelmengen vor den Wänden des Verbrennungsraumes verdampfen.

2. Verfahren nach Anspruch 1, **dadurch gekennzeichnet, dass** die Tropfen einen Durchmesser zwischen 0,01 und 10 mm, vorzugsweise zwischen 0,3 und 2 mm, haben.

3. Verfahren nach einem der vorangehenden Ansprüche, **dadurch gekennzeichnet, dass** die Spaltdüse zentral im Verbrennungsgas im zu behandelnden Verbrennungsgasvolumenstrom angeordnet wird, um einen möglichst großen Abstand zu allen Kesselwänden sicherzustellen.

4. Verfahren nach einem der vorangehenden Ansprüche, **dadurch gekennzeichnet, dass** die Temperatur des Verbrennungsgases gemessen wird, und insbesondere zusätzlich die Höhe, in der das Reduktionsmittel eingebracht wird, gemäß der gemessenen Temperatur eingestellt wird.

5. Verfahren nach einem der vorangehenden Ansprüche, **dadurch gekennzeichnet, dass** das Reduktionsmittel Lösungsmittel, Ammoniak und/oder Harnstoff umfasst und der Zufluss von Lösungsmittel, Harnstoff und/oder Ammoniak zur Spaltdüse insbesondere einzeln steuerbar ist, wobei bevorzugt die Temperatur der Spaltdüse oder der Zuleitung zu der Spaltdüse überwacht wird und bei Überschreiten von vorher festgelegten Richtwerten der Zufluss des Lösungsmittels oder des Lösungsmittelanteils im Reduktionsmittel erhöht wird, um eine Kühlung der Spaltdüse und deren Zuleitung zu erreichen und/oder wobei Ammoniak und Harnstoff bevorzugt in Mischung in dem Reduktionsmittel enthalten sind.

6. Verfahren nach einem der vorangehenden Ansprüche, **dadurch gekennzeichnet, dass** die Tropfen einen Abflugwinkel zwischen -10° und 60° bezüglich der Waagerechten haben.

7. Vorrichtung zur Entstickung der Abgase von Verbrennungsanlagen, die mindestens eine mit einem flüssigen Reduktionsmittel beaufschlagte Spaltdüse aufweist, mit der das Reduktionsmittel als ein aus der Spaltdüse austretender Film dermaßen eingedüst werden kann, dass sich im Verbrennungsgas Tropfen des Reduktionsmittels bilden, mindestens ein Messgerät, welches die Temperatur des Bereichs der Verbrennungsgase bestimmt, in den die Tropfen eindringen werden, und/oder ein Messgerät, welches die NOx- und/oder NH₃-Konzentration der Verbrennungsgase bestimmt, sowie einen Mechanismus, mit dem sich die Düsenöffnung verändern lässt.

8. Vorrichtung nach Anspruch 7, **dadurch gekennzeichnet, dass** die Düsenöffnung zwischen 0,01 mm und 10 mm, insbesondere zwischen 0,3 mm und 1,2 mm, liegt und bevorzugt entsprechend der Verteilungsaufgabe in diesem Bereich variiert werden kann.

9. Vorrichtung nach Anspruch 7 oder 8, **dadurch gekennzeichnet, dass** der Austrittswinkel der Spaltdüse zwischen -10° und 60° bezüglich der Waagerechten liegt.

10. Vorrichtung nach einem der Ansprüche 7 bis 9, **dadurch gekennzeichnet, dass** diese derart gestaltet ist, dass mindestens eine Spaltdüse oder mehrere Spaltdüsen durch eine oder mehrere zentral gelegene Öffnungen durch die Kesseldecke in den Kessel bis zur optimalen Reaktionsebene, insbesondere stufenlos, eingebracht werden kann/können.

## Claims

1. A method for denitrification of flue gases from incineration plants by using a liquid reducing agent, **characterized in that** the said reducing agent is evenly distributed in a predetermined region of the combustion gases in a suitable quantity per unit time by means of a slot nozzle, such that, in the combustion gas, drops of the reducing agent form from a film of the reducing agent exiting from the slot nozzle, and quantities of reducing agent introduced per time unit into the combustion gas volume flow to be treated evaporate before the walls of the combustion chamber.

2. The method according to claim 1, **characterized in that** the said drops have a diameter between 0.01 and 10 mm, preferably between 0.3 and 2 mm.

3. The method according to any one of the preceding claims, **characterized in that** the slot nozzle is positioned centrally in the combustion gas in the combustion gas volume flow in order to ensure that the distance to all boiler walls is as large as possible.

4. The method according to any one of the preceding claims, **characterized in that** the temperature of the combustion gas is measured, and in particular, in addition, the height at which the reducing agent is introduced is adjusted according to the measured temperature.

5. The method according to any one of the preceding claims, **characterized in that** the reducing agent comprises solvent, ammonia and/or urea, and that, in particular, the inflow of solvent, urea and/or ammonia to the slot nozzle can be controlled individually, the temperature of the slot nozzle or of the feed line to the slot nozzle preferably being monitored and, if predetermined target values are exceeded, the inflow of the solvent or of the solvent proportion in the reducing agent being increased in order to achieve cooling of the slot nozzle and of its feed line, and/or ammonia and urea preferably being contained in the reducing agent in mixture.

6. The method according to any one of the preceding claims, **characterized in that** the drops have an exit angle between -10° and 60°, relative to the horizontal.

7. A device for removing nitrogen from the flue gases of incineration plants, comprising at least one slot nozzle charged with a liquid reducing agent, by means of which the reducing agent can be injected, as a film exiting from the said slot nozzle, in such a manner that drops of the reducing agent are formed in the combustion gas, at least one measuring device which determines the temperature of the region of the combustion gases into which the drops will be entering, and/or a measuring device which determines the NOx and/or NH₃ concentration of the combustion gases, and a mechanism by which the nozzle opening can be changed.

8. The device according to claim 7, **characterized in that** the nozzle opening is between 0.01 mm and 10 mm, in particular between 0.3 mm and 1.2 mm, and can preferably be varied according to the distribution task in this area.

9. The device according to claim 7 or 8, **characterized in that** the exit angle of the slot nozzle is between -10° and 60°, with respect to the horizontal.

10. The device according to any one of claims 7 to 9, **characterized in that** it is designed such that at least one slot nozzle or more slot nozzles can be inserted through one or more centrally located openings through the boiler ceiling into the boiler down to the optimal plane of the reaction, in particular steplessly.

## Revendications

1. Procédé de dénitration des gaz brûlés par des installations de combustion en utilisant un agent de réduction liquide, **caractérisé en ce que** l'agent de réduction est réparti en une quantité appropriée par unité de temps de manière égale dans une zone prédéterminée du gaz de combustion au moyen d'une buse à fente, de sorte que des gouttes de l'agent de réduction se forment à partir d'un film de l'agent de réduction généré à partir de la buse à fente dans le gaz de combustion et les quantités d'agent de réduction déposées dans le flux volumique de gaz de combustion par unité de temps à traiter s'évaporent devant les parois de la chambre de combustion.

2. Procédé selon la revendication 1, **caractérisé en ce que** les gouttes ont un diamètre compris entre 0,01 et 10 mm, de préférence compris entre 0,3 et 2 mm.

3. Procédé selon l'une des revendications précédentes, **caractérisé en ce que** la buse à fente est disposée de manière centrale dans le gaz de combustion dans le flux volumique de gaz de combustion à traiter, pour garantir un espacement le plus grand possible à toutes les parois de la chaudière.

4. Procédé selon l'une des revendications précédentes, **caractérisé en ce que** la température du gaz de combustion est mesurée et en particulier en outre la hauteur à laquelle l'agent de réduction est déposé est ajustée conformément à la température mesurée.

5. Procédé selon l'une des revendications précédentes, **caractérisé en ce que** l'agent de réduction comprend des solvants, de l'ammoniac et/ou de l'urée, et l'afflux de solvants, d'urée et/ou d'ammoniac à la buse à fente peut être commandé en particulier individuellement, la température de la buse à fente ou de la conduite d'amenée à la buse à fente étant de préférence surveillée et lorsque les valeurs de référence prédéterminées sont dépassées vers le haut l'afflux du solvant ou de la fraction de solvant dans l'agent de réduction est augmenté pour atteindre un refroidissement de la buse à fente et de sa conduite d'amenée et/ou de l'ammoniac et de l'urée étant de préférence contenus en mélange dans l'agent de réduction.

6. Procédé selon l'une des revendications précédentes, **caractérisé en ce que** les gouttes ont un angle de départ compris entre -10° et 60° par rapport à l'horizontale.

7. Dispositif de dénitration des gaz brûlés par des installations de combustion, qui présente au moins une buse à fente alimentée avec un agent de réduction liquide, avec laquelle l'agent de réduction peut être injecté en tant que film généré à partir de la buse à fente au point que dans le gaz de combustion des gouttes de l'agent de réduction se forment, au moins un appareil de mesure, lequel détermine la température de la zone des gaz de combustion, dans lesquels les gouttes vont pénétrer, et/ou un appareil de mesure, lequel détermine la concentration en NOx et/ou en NH₃ des gaz de combustion, ainsi qu'un mécanisme avec lequel l'ouverture de buse peut être modifiée.

8. Dispositif selon la revendication 7, **caractérisé en ce que** l'ouverture de buse se situe entre 0,01 mm et 10 mm, en particulier entre 0,3 mm et 1,2 mm et peut varier de préférence en corrélation avec l'objectif de répartition dans cette plage.

9. Dispositif selon la revendication 7 ou 8, **caractérisé en ce que** l'angle de sortie de la buse à fente se situe entre -10° et 60° par rapport à l'horizontale.

10. Dispositif selon l'une des revendications 7 à 9, **caractérisé en ce que** celui-ci est conçu de telle sorte qu'au moins une buse à fente ou plusieurs buses à fente peuvent être déposées par le biais d'une ou plusieurs ouvertures agencées centralement à travers le couvercle de chaudière dans la chaudière jusqu'au plan de réaction optimal, en particulier en continu.
